Europäisches Patentamt

European Patent Office

Office européen des brevets

(11) Veröffentlichungsnummer: **0 192 850**
**A1**

## (12) EUROPÄISCHE PATENTANMELDUNG

(21) Anmeldenummer: **85116108.3**

(22) Anmeldetag: **17.12.85**

(51) Int. Cl.⁴: **H 01 L 31/02**
**G 02 B 6/42**

(30) Priorität: **07.01.85 DE 3500317**

(43) Veröffentlichungstag der Anmeldung:
**03.09.86 Patentblatt 86/36**

(84) Benannte Vertragsstaaten:
**DE FR GB**

(71) Anmelder: **Siemens Aktiengesellschaft Berlin und München**
**Wittelsbacherplatz 2**
**D-8000 München 2(DE)**

(72) Erfinder: **Trommer, Reiner, Dr.**
**Scherbaumstrasse 9b**
**D-8000 München 83(DE)**

(54) **Monolithisch integriertes optoelektronisches Halbleiterbauelement.**

(57) Monolithisch integriertes optoelektronisches Halbleiterbauelement, bei dem ein Lichtwellenleiter (2) und ein Fotodetektor (1) auf einander gegenüberliegenden Seiten eines Halbleitersubstrats (3) aufgebracht sind, und bei dem ein Koppelelement (4) vorgesehen ist, welches Strahlung aus dem Wellenleiter (2) auskoppelt und durch das Substrat (3) dem Fotodetektor (1) zuführt.

Monolithisch integriertes optoelektronisches Halbleiterbauelement.

Die vorliegende Erfindung betrifft ein monolithisch integriertes optoelektronisches Halbleiterbauelement nach dem
Oberbegriff des Patentanspruchs 1.

Halbleiterbauelemente der genannten Art, bei denen insbesondere ein oder mehrere Fotodetektoren durch einen oder
mehrere Lichtwellenleiter beleuchtet werden, werden in der
Zukunft als Schnittstellen zwischen optischer und elektrischer Signalübertragung eingesetzt.

Aufgabe der vorliegenden Erfindung ist es, eine räumliche
Ausführung eines Bauelementes der eingangs genannten Art
anzugeben, durch die eine vorteilhafte optische Kopplung
zwischen Lichtwellenleitern und Fotodetektoren, d.h. eine
vorteilhafte Beleuchtung der Fotodetektoren durch die Lichtwellenleiter, ermöglicht wird.

Diese Aufgabe wird durch die im kennzeichnenden Teil des
Patentanspruchs 1 angegebenen Merkmale gelöst.

Der Vorteil der erfindungsgemäßen Anordnung liegt darin, daß
die Technologieschritte zur Herstellung von Wellenleitern
und Fotodetektoren weitgehend unabhängig voneinander durchgeführt werden, und daß der Fotodetektor in konventioneller
Weise senkrecht zur Oberfläche beleuchtet wird, was wiederum
zu geringen Kopplungsverlusten, einem hohen Quantenwirkungsgrad und hoher Ansprechgeschwindigkeit führt.

Ed 1 Bla / 7.1.1985

Eine bevorzugte Ausführungsform eines erfindungsgemäßen
Bauelements ist nach Anspruch 2 so ausgebildet, daß das
Koppelelement aus einer Umlenkspiegelfläche besteht, die
Strahlung aus dem Wellenleiter auf den Fotodetektor umlenkt. Eine derartige Umlenkspiegelfläche kann vorzugsweise gemäß Anspruch 3 so realisiert werden, daß die Umlenkspiegelfläche durch eine schräge Flanke einer Furche
realisiert ist, die durch Grabenätzung hergestellt werden
kann.

Der Fotodetektor besteht vorwiegend gemäß Anspruch 4 aus
einer Fotodiode, einem Fototransistor oder einem Fotodetektor.

Der Lichtwellenleiter ist vorzugsweise gemäß Anspruch 5
als Schicht- oder Streifenwellenleiter ausgebildet und kann
gemäß Anspruch 6 wenigstens ein zusätzliches optisches Element enthalten, das gemäß Anspruch 7 aus einem Beugungsgitter oder aus einem elektrooptischen Modulator bestehen kann.
Neben diesen speziellen optischen Elementen, die bevorzugt
verwendet werden, kommen aber auch andere Elemente in Frage.

Ein Ausführungsbeispiel der Erfindung wird in der folgenden
Beschreibung anhand der Figur näher erläutert.

Die Figur zeigt einen Schnitt in Ausbreitungsrichtung einer
im Wellenleiter eines Halbleiterbauelementes geführten Strahlung.

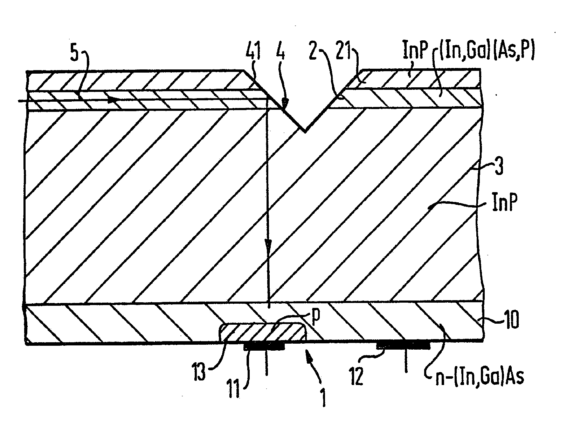

In der Ausführungsform nach Fig.1 besteht das Substrat 3 aus
einem Substratkristall aus InP. Der Lichtwellenleiter besteht
aus einer auf der Oberseite des Substrats aufgebrachten
lichtführenden Schicht 2 aus (In,Ga) (As,P), die von einer
InP-Schicht 21 bedeckt ist. Dadurch ist auf der Oberseite des
Substrats eine Doppelhetero-Struktur aus InP/(In,Ga)(As,P)/
InP gegeben, die insgesamt den Lichtwellenleiter bildet.

Es sei angenommen, daß sich die Strahlung in der den eigentlichen Lichtwellenleiter bildenden lichtführenden Schicht 2 parallel zur Zeichenebene, beispielsweise in Richtung des Pfeiles 5 ausbreite.

Auf der Unterseite des Substrats 3 ist eine PIN-Diode 1 ausgebildet, die durch eine auf die Unterseite aufgebrachte lichtabsorbierende Schicht (10) aus n-(In,Ga)As, einem in dieser Schicht 10 ausgebildeten p-dotierten Gebiet 13, einem auf diesem Gebiet 13 aufgebrachten p-Kontakt 11 und einem außerhalb dieses Gebietes 13 auf der Schicht 10 aufgebrachten n-Kontakt 12 realisiert ist.

Während die Schicht 10 lichtabsorbierend ist, ist das InP-Substrat 3 für die im Wellenleiter 2 geführte Strahlung transparent.

Die im Wellenleiter 2 in Richtung des Pfeiles 5 geführte Strahlung wird durch das Umlenkelement 4 auf das p-Gebiet 13 und damit auf die Fotodiode 1 umgelenkt. Dieses Umlenkelement 4 ist durch eine senkrecht zur Zeichenebene verlaufende V-Nut realisiert, deren im Winkel von 45° zur Richtung 5 geneigte und dieser Richtung 5 zugekehrte stromaufliegende Flanke 41 für die in Richtung 5 sich ausbreitende Strahlung eine Spiegelfläche bildet. Diese Spiegelfläche kann eine totalreflektierende brechende Fläche sein. Sie kann aber auch beispielsweise durch Aufbringen einer reflektierenden Schicht auf die Flanke 41 realisiert sein.

Das Umlenkelement 4 kann aber auch anders realisiert sein, beispielsweise durch ein in die Oberfläche des Wellenleiters 2 eingebrachtes Umlenkgitter.

85 P 1003 E

0192850

Patentansprüche:

1. Monolithisch integriertes optoelektronisches Halbleiterbauelement, wobei wenigstens ein Fotodetektor (1) an wenigstens einen Lichtwellenleiter (2) optisch gekoppelt ist,
dadurch g e k e n n z e i c h n e t ,
- daß der Lichtwellenleiter (2) und der Fotodetektor (1) auf einander gegenüberliegenden Seiten eines Halbleitersubstrats (3) aufgebracht sind, und
- daß ein Koppelelement (4) vorgesehen ist, welches Strahlung aus dem Wellenleiter (2) auskoppelt und durch das Substrat (3) dem Fotodetektor (1) zuführt.

2. Bauelement nach Anspruch 1, dadurch g e k e n n - z e i c h n e t , daß das Koppelelement (4) aus einer Umlenkspiegelfläche (41) besteht, die Strahlung (5) aus dem Wellenleiter (2) auf den Fotodetektor (1) umlenkt.

3. Bauelement nach Anspruch 2, d adurch g e k e n n - z e i c h n e t , daß die Umlenkspiegelfläche (41) durch eine schräge Flanke einer Furche realisiert ist.

4. Bauelement nach einem der vorhergehenden Ansprüche, dadurch g e k e n n z e i c h n e t , daß der Fotodetektor (1) aus einer Fotodiode, einem Fototransistor oder aus einem Fotoleiter besteht.

5. Bauelement nach einem der vorhergehenden Ansprüche, dadurch g e k e n n z e i c h n e t , daß der Lichtwellenleiter (2) als Schicht- oder Streifenwellenleiter ausgebildet ist.

6. Bauelement nach Anspruch 5, dadurch g e k e n n - z e i c h n e t , daß der Lichtwellenleiter (2) wenigstens ein zusätzliches optisches Element enthält.

7. Bauelement nach Anspruch 6, dadurch g e k e n n - z e i c h n e t , daß das zusätzliche optische Element aus einem Beugungsgitter oder aus einem elektrooptischen Modulator besteht.

0192850

# Europäisches Patentamt

## EUROPÄISCHER RECHERCHENBERICHT

0192850

Nummer der Anmeldung

EP 85 11 6108

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | PATENT ABSTRACTS OF JAPAN, Band 6, Nr. 87 (E-108)[965], 25. Mai 1982; & JP - A - 57 23281 (MITSUBISHI) 06.02.1982<br><br>--- | 1,4-7 | H 01 L 31/02<br>G 02 B 6/42 |
| A | DE-A-2 744 128 (SIEMENS)<br>* Seite 5, Zeilen 25-32 *<br><br>--- | 1-4 | |
| A | US-A-4 163 953 (NORTHERN TELECOM)<br>* Anspruch 1 *<br><br>--- | 1-3,5 | |
| A | US-A-3 871 742 (BELL TELEPHONE LABORATORIES)<br>* Ansprüche 1, 2, 5 *<br><br>----- | 1,5-7 | |
| | | | **RECHERCHIERTE SACHGEBIETE (Int Cl 4)**<br><br>G 02 B 6/42<br>H 01 L 31/02 |

Der vorliegende Recherchenbericht wurde für alle Patentansprüche erstellt.

| Recherchenort<br>BERLIN | Abschlußdatum der Recherche<br>16-05-1986 | Prüfer<br>GIBBS C.S. |
|---|---|---|